(19) Europäisches Patentamt
European Patent Office
Office européen des brevets

(11) **EP 4 283 704 A2**

(12) **EUROPEAN PATENT APPLICATION**

(43) Date of publication:
**29.11.2023 Bulletin 2023/48**

(21) Application number: **23175282.5**

(22) Date of filing: **25.05.2023**

(51) International Patent Classification (IPC):
**H01M 4/13** $^{(2010.01)}$    **H01M 4/133** $^{(2010.01)}$
**H01M 4/36** $^{(2006.01)}$    **H01M 4/48** $^{(2010.01)}$
**H01M 4/587** $^{(2010.01)}$    **H01M 4/62** $^{(2006.01)}$

(52) Cooperative Patent Classification (CPC):
**H01M 4/13; H01M 4/133; H01M 4/364;**
**H01M 4/483; H01M 4/587; H01M 4/622;**
H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.05.2022 KR 20220064751**

(71) Applicant: **SK On Co., Ltd.**
**Seoul 03161 (KR)**

(72) Inventors:
• **CHUNG, Da Bin**
**34124 Daejeon (KR)**
• **KIM, Moon Sung**
**34124 Daejeon (KR)**

• **KIM, Hyo Mi**
**34124 Daejeon (KR)**
• **RYU, Sang Baek**
**34124 Daejeon (KR)**
• **PARK, Da Hye**
**34124 Deajeon (KR)**
• **YOOK, Seung Hyun**
**34124 Daejeon (KR)**
• **JANG, Hwan Ho**
**34124 Daejeon (KR)**
• **HAN, Jun Hee**
**34124 Daejeon (KR)**

(74) Representative: **Prüfer & Partner mbB**
**Patentanwälte · Rechtsanwälte**
**Sohnckestraße 12**
**81479 München (DE)**

(54) **ANODE FOR SECONDARY BATTERY, METHOD OF FABRICATING THE SAME AND LITHIUM SECONDARY BATTERY INCLUDING THE SAME**

(57) An anode for a lithium secondary battery includes an anode current collector, and a first anode active material layer and a second anode active material layer sequentially stacked on a surface of the anode current collector. Each of the first anode active material layer and the second anode active material layer includes an anode active material and a binder. A content of a free binder unbonded with the anode active material in the first anode active material layer based on a weight of the binder included in the first anode active material layer is greater than a content of a free binder unbonded with the anode active material in the second anode active material layer based on a weight of the binder included in the second anode active material layer.

FIG. 1

EP 4 283 704 A2

**Description**

BACKGROUND

1. Field

The present disclosures relate to an anode for a secondary battery, a method of fabricating the same and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric automobile, a hybrid vehicle, etc.

Examples of the secondary battery includes, e.g., a lithium secondary battery, a nickel-cadmium battery, a nickel-hydrogen battery, etc. The lithium secondary battery is actively developed and applied due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape accommodating the electrode assembly and the electrolyte.

A graphite-based material may be used as an anode active material. Recently, demands for the lithium secondary battery having higher capacity and power is being increased, a silicon-based active material is introduced as the anode active material.

However, the silicon-based material may cause contraction/expansion during repeated charge/discharge cycles to result in peel-off of an anode active material layer and side reactions with the electrolyte. Further, a life-span of the secondary battery may be lowered during the repeated charge/discharge.

Thus, a construction of the anode capable of providing improved charging efficiency while achieving sufficient life-span properties and operational stability is required.

SUMMARY

According to an aspect of the present disclosures, there is provided an anode for a secondary battery having improved charging property and stability.

According to an aspect of the present disclosures, there is provided a method of fabricating an anode for a secondary battery with improved charging property and stability.

According to an aspect of the present disclosures, there is provided a lithium secondary battery having improved charging property and stability.

An anode for a lithium secondary battery includes an anode current collector, and a first anode active material layer and a second anode active material layer sequentially stacked on a surface of the anode current collector. Each of the first anode active material layer and the second anode active material layer includes an anode active material and a binder. A content of a free binder unbonded with the anode active material in the first anode active material layer based on a weight of the binder included in the first anode active material layer is greater than a content of a free binder unbonded with the anode active material in the second anode active material layer based on a weight of the binder included in the second anode active material layer.

In some embodiments, the first anode active material layer and the second anode active material layer may each be formed from an anode slurry containing the anode active material and the binder. A free binder content calculated by Equation 1 below of the first anode active material layer may be greater than a free binder content calculated by Equation 1 below of the second anode active material layer.

[Equation 1]

$$\text{Free Binder Content (\%)} = [(W_{UI}-W_{UF})/B_T]*100$$

In Equation 1, $B_T$ is a total weight (g) of the binder included in the anode slurry. The anode slurry is phase-separated into an upper slurry and a lower slurry by centrifuging at 15,000 rpm for 20 minutes, and a weight (g) of the upper slurry after being dried is represented as $W_{UI}$, and $W_{UF}$ is a weight (g) after firing the dried upper slurry by heating from a room temperature to 400 °C at a rate of 50 °C/min.

In some embodiments, the anode slurry may further include a conductive material.

In some embodiments, a ratio of the free binder content of the second anode active material layer to the free binder content of the first anode active material layer may be 0.6 or less.

In some embodiments, the free binder content of the second anode active material layer may be 6 % or less.

In some embodiments, the free binder content of the first anode active material layer may be 10 % or more.

In some embodiments, each of the first anode active material layer and the second anode active material layer may include a silicon-based active material and a carbon-based active material as the anode active material.

In some embodiments, the carbon-based active material may include artificial graphite.

In some embodiments, a content of the silicon-based active material may be from 5 wt% to 30 wt% based on a total weight of the anode active material.

In some embodiments, a degree of vertical orientation of the carbon-based active material included in the first anode active material layer is smaller than a degree of vertical orientation of the carbon-based active material included in the second anode active material layer.

A lithium secondary battery includes the anode for a secondary battery according to the above-described embodiments, and a cathode facing the anode and including a lithium-transition metal oxide as a cathode active material.

In a method of fabricating an anode for a lithium secondary battery, a first anode slurry and a second anode slurry each containing a binder, an anode active material and a conductive material are prepared. A first anode active material layer and a second anode active material layer are formed by sequentially coating the first anode slurry and the second anode slurry on an anode current collector. A free binder content calculated by Equation 1 below of the first anode slurry is greater than a free binder content calculated by Equation 1 below of the second anode slurry.

[Equation 1]

$$\text{Free Binder Content (\%)} = [(W_{UI}-W_{UF})/B_T]*100$$

In Equation 1, $B_T$ is a total weight (g) of the binder included in the anode slurry. The anode slurry is phase-separated into an upper slurry and a lower slurry by centrifuging at 15,000 rpm for 20 minutes, and a weight (g) of the upper slurry after being dried is represented as $W_{UI}$. $W_{UF}$ is a weight (g) after firing the dried upper slurry by heating from a room temperature to 400 °C at a rate of 50 °C/min.

In some embodiments, in the preparation of the second anode slurry, a preliminary anode slurry may be prepared by dispersing the anode active material and the binder. The conductive material may be added to the preliminary anode slurry.

In some embodiments, in the preparation of the second anode slurry, the preliminary anode slurry may be phase-separated by centrifuging before adding the conductive material. An upper slurry of the phase-separated preliminary anode slurry may be removed.

In some embodiments, in the formation of the first anode active material layer and the second anode active material layer, a first preliminary anode active material layer and a second preliminary anode active material layer may be formed by sequentially coating the first anode slurry and the second anode slurry on the anode current collector. A magnetic field may be applied in a vertical direction to the anode current collector to orient the anode active material.

In some embodiments, the anode active material may include a carbon-based active material and a silicon-based active material. A degree of vertical orientation of the carbon-based active material included in the first anode active material layer is smaller than a degree of vertical orientation of the carbon-based active material included in the second anode active material layer.

The anode for a secondary battery according to embodiments of the present disclosures may include a plurality of anode active material layers having different contents of a free-binder. Thus, an adhesion between an anode current collector and an anode active material layer and life-span properties of the battery may be improved while enhancing a rapid charging performance and reducing a resistance of the anode.

BRIEF DESCRIPTION OF THE DRAWINGS

FIG. 1 is a schematic cross-sectional view illustrating an anode for a secondary battery in accordance with exemplary embodiments.

FIGS. 2 and 3 are a schematic plan view and a schematic cross-sectional view, respectively, illustrating a secondary battery in accordance with exemplary embodiments.

## DETAILED DESCRIPTION OF THE EMBODIMENTS

According to embodiments of the present disclosures, an anode for a secondary battery including a plurality of anode active material layers is included. Further, a method of preparing the anode is also provided. According to embodiments of the present disclosures, a lithium secondary battery including the anode is also provided.

The term "free binder" as used herein may refer to a binder that is not combined with an anode active material. For example, a binder that is combined with the conductive material but is not combined with the anode active material may be included in the free binder.

Hereinafter, the present invention will be described in detail with reference to exemplary embodiments and the accompanying drawings. However, those skilled in the art will appreciate that such embodiments described with reference to the accompanying drawings are provided to further understand the spirit of the present invention and do not limit subject matters to be protected as disclosed in the detailed description and appended claims.

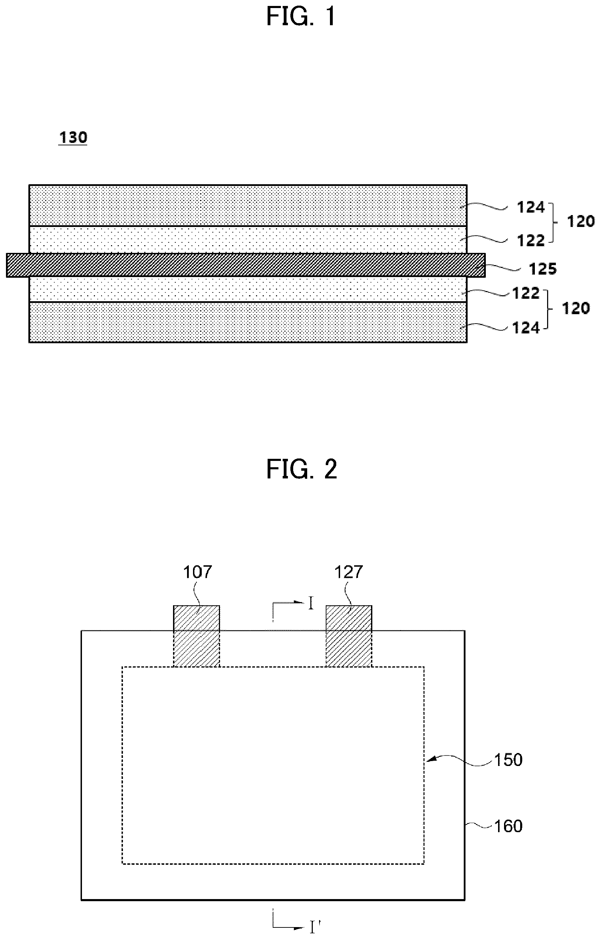

FIG. 1 is a schematic cross-sectional view illustrating an anode for a secondary battery in accordance with exemplary embodiments.

Referring to FIG. 1, an anode 130 includes an anode current collector 125 and an anode active material layer 120 formed on a surface of the anode current collector 125.

The anode active material layer 120 has a multi-layered structure including a first anode active material layer 122 and a second anode active material layer 124.

For example, the anode current collector 125 may include gold, stainless steel, nickel, aluminum, titanium, copper, or an alloy thereof. In one embodiment, the anode current collector 125 may include copper or a copper alloy.

The anode active material layer 120 may be formed on at least one surface of the anode current collector 125. For example, the anode active material layer 120 may be coated on upper and lower surfaces of the anode current collector 125. For example, the anode active material layer 120 may directly contact the surface of the anode current collector 125.

In some embodiments, the first anode active material layer 122 may be directly formed on the surface of the anode current collector 125. For example, the second anode active material layer 124 may be directly formed on a surface of the first anode active material layer 122. An adhesion between the anode active material layer 120 and the anode current collector 125 and rapid charging properties of the secondary battery may be improved using the multi-layered structure of the anode active material layer 120.

Each of the first anode active material layer 122 and the second active material layer 124 may include an anode active material and a binder.

In some embodiments, the anode active material may include a carbon-based active material and a silicon-based active material. For example, the carbon-based active material and the silicon-based active material may be used together, so that power and capacity properties of a secondary battery may be explicitly improved beyond atheoretical capacity limit of the carbon-based active material, and excessive contraction/expansion of the silicon-based active material may be avoided or alleviated.

Examples of the carbon-based active material include graphite, hard carbon, soft carbon, and cokes. In some embodiments, a mixture of natural graphite and artificial graphite may be used as the carbon-based active material.

For example, artificial graphite or a mixture of natural graphite and artificial graphite may be used as the carbon-based active material. Life-span properties of the carbon-based active material may be improved by artificial graphite, and thus life-span properties and stability of the secondary battery may be improved.

For example, the silicon-based active material may include silicon (Si), a silicon alloy, SiOx (0<x<2), or a SiOx (0<x<2) containing a lithium or magnesium compound. For example, the SiOx containing the lithium or magnesium compound may include SiOx pre-treated with lithium or magnesium. For example, the SiOx containing the lithium or magnesium compound may include lithium silicate or magnesium silicate.

In some embodiments, the silicon-based active material may include a silicon-carbon composite material. For example, the silicon-carbon composite material may include silicon carbide (SiC) or a silicon-carbon particle having a core-shell structure. In some embodiments, the silicon-carbon composite material may include a porous carbon and a silicon-containing coating layer formed at an inside of pores of the porous carbon or on a surface of the porous carbon.

The binder may include, e.g., vinylidene fluoride-hexafluoropropylene copolymer (PVDF-co-HFP), polyvinylidenefluoride (PVDF), polyacrylonitrile, polymethyl methacrylate, styrene-butadiene rubber (SBR), polyvinyl alcohol, polyacrylic acid (PAA), etc. These may be used alone or in a combination of two or more therefrom.

In example embodiments, the binder may include a cellulose-based binder. Examples of the cellulose-based binder may include carboxymethyl cellulose (CMC), hydroxypropylcellulose, diacetylcellulose, etc. These may be used alone or in a combination of two or more thererfrom. For example, carboxymethyl cellulose (CMC) may be used.

For example, the cellulose-based binder may be easily combined with the silicon-based active material in a preliminary anode slurry preparation performed at a temperature from 50 °C to 90 °C. Additionally, the cellulose-based binder may be decomposed in a firing at a temperature of 400 °C or higher, and thus a free binder content in the anode active material layer 120 may be easily measured.

In some embodiments, each of the first and second anode active material layers 122 and 124 may further include a conductive material. The conductive material may be included to promote electron mobility between active material particles. For example, a carbon-based material such as graphite, carbon black, graphene, and carbon nanotubes, or a metal-based material including tin, tin oxide, titanium oxide, a perovskite material such as, $LaSrCoO_3$ and $LaSrMnO_3$, etc., may be used.

A content of a free binder unbonded with the anode active material among the binder included in the first anode active material layer 122 is greater than a content of a free-binder unbonded with the anode active material among the binder included in the second anode active material layer 124. Accordingly, an adhesion of the anode active material layer 120 to the anode current collector 125 may be improved, and a resistance on the surface of the anode may be reduced. Thus, life-span properties and rapid charging performance of the secondary battery may be improved.

In some embodiments, each of the first anode active material layer 122 and the second anode active material layer 124 may be formed from an anode slurry including the anode active material and the binder.

For example, the free-binder content included in each of the first anode active material layer 122 and the second anode active material layer 124 may be calculated by Equation 1 below.

[Equation 1]

$$Free\ Binder\ Content\ (\%) = [(W_{UI} - W_{UF})/B_T]*100$$

In Equation 1, $B_T$ is a total weight (g) of the binder included in the anode slurry. The binder included in the anode slurry may exist in the form that is bonded with or unbonded with the anode active material. When the anode slurry is centrifuged, the binder bonded with the anode active material may be phase-separated into a lower layer, and the binder unbonded with the anode active material may be phase-separated into an upper layer.

In example embodiments, the anode slurry may be phase-separated into an upper slurry and a lower slurry by centrifuging at 15,000 rpm for 20 minutes. In Equation 1, $W_{UI}$ represents a weight (g) of the upper slurry after being dried. $W_{UI}$ may represent a total solid content (g) of the upper slurry.

$W_{UF}$ represents a solid content (g) of the upper slurry from which the free-binder is removed.

In example embodiments, after being dried, the upper slurry may be fired while heating from a room temperature to 400 °C at a ramping rate of 50 °C/min. Accordingly, the free binder of the dried upper slurry may be decomposed and removed. An amount of the free binder can be measured through a weight loss of the upper slurry.

For example, the room temperature may be about 25 °C.

For example, the firing temperature may be 800 °C or less. In an embodiment, the firing temperature may be adjusted in a range from 400 °C to 500 °C so that the free binder may be removed. If the firing temperature exceeds 800 °C, the conductive materials and the active material other than the free binder may be decomposed, and the content (%) of the free binder may be inaccurately measured.

In some embodiments, a ratio of the free binder content of the second anode active material layer 124 relative to the free binder content of the first anode active material layer 122 may be 0.6 or less, preferably 0.55 or less. Within the above range, a vertical orientation of the anode active material layer 120 may be improved while preventing the anode active material layer 120 from being separated from the anode current collector 125. Accordingly, mechanical stability and rapid charging properties of the secondary battery may be improved.

For example, the ratio of the free binder content of the second anode active material layer 124 relative to the free binder content of the first anode active material layer 122 may be 0.15 or more, preferably 0.2 or more. Within the above range, a degradation of processability caused by an excessive fluidity gap between the slurries of the first and second anode active material layers 122 and 124 may be prevented.

In some embodiments, the free binder content of the first anode active material layer 122 may be 8 % or more, preferably 10 % or more. Within the above range, the adhesion between the anode current collector 125 and the anode active material layer 120 may be improved, and a resistance in resistance of the anode may be prevented.

For example, the free binder content of the first anode active material layer 122 may be 20 % or less. Within the above range, the binder may sufficiently disperse the active material to suppress particle aggregation. Accordingly, deterioration or power properties of the lithium secondary battery may be prevented.

In some embodiments, the free binder content of the second anode active material layer 124 may be from 0.1 % to 6 %, preferably from 2 % to 6 %. Within the above range, mechanical stability of the lithium secondary battery may be maintained, a degree of vertical orientation of the anode active material may increase, and the resistance of the anode may be decreased. For example, within the above content range, the degradation of processability due to a low slurry viscosity may be prevented.

In some embodiments, a content of the carbon-based active material in the total weight of the anode active material may be in a range from 50 weight percent (wt%) to 95 wt%, preferably from 75 wt% to 95 wt%. Within the above range, the vertical orientation of the anode active material layer 120 according to an application of a magnetic field may be easily implemented, and expansion/contraction of the silicon-based active material used together with the carbon-based active material may be avoided or alleviated.

In some embodiments, a content of the silicon-based active material in the total weight of the anode active material may be in a range from 5 wt% to 30 wt%. Within the above range, capacity properties may be improved while maintaining/improving the life-span properties of the lithium secondary battery.

Hereinafter, a method for fabrication the anode for a secondary battery will be described in more detail.

In example embodiments, each of the first anode active material layer 122 and the second anode active material layer 124 may be formed by coating a first anode slurry and a second anode slurry including the anode active material and the binder on the surface of the anode current collector 125.

For example, the first anode slurry and the second anode slurry may each be prepared. The first anode slurry and the second anode slurry may be coated on the anode current collector 125.

In example embodiments, the first anode slurry may be coated on the anode current collector 125, and then the second anode slurry may be coated on the coated first anode slurry. Thereafter, the first anode slurry and the second anode slurry may be dried and pressed together to form the first anode active material layer 122 and the second anode active material layer 124.

The free binder contents of the first anode slurry and the second anode slurry may be defined by Equation 1 above.

For example, the free binder content of the anode active material layer 120 may be adjusted in consideration of an adhesive strength of the anode active material layer 120, resistance properties on the surface of the anode, etc.

For example, the silicon-based active material may provide a high energy density, but may cause a lifting between the anode current collector 125 and the anode active material layer 120 due to expansion/contraction occurring during charging and discharging. Further, when a magnetic field is applied to the anode slurry, a self-oriented anode active material may expand and contract in the same direction according to charging and discharging, and mechanical stability of the lithium secondary battery may be deteriorated.

The free binder included in the first and second anode slurries may provide viscosity to the first and second anode slurries. Accordingly, reliability and stability of the above-described coating process of the anode slurry may be improved.

In some embodiments, the first anode active material layer 122 may be formed from the anode slurry having a relatively large free binder content, so that the adhesion to the anode current collector 125 may be improved. Accordingly, even when the content of the silicon-based active material included in the entire anode active material layer 120 is high, detachment of the anode active material layer due to repeated expansion/contraction may be prevented and the adhesion to the current collector may be maintained. Additionally, the life-span properties may be maintained or improved even when the magnetic field is applied to the anode slurry.

For example, the free binder content of the anode slurry may be increased by increasing the content of a solid content of the binder included in the anode slurry.

However, an anode slurry having a relatively large free binder content may have a low fluidity, and thus a degree of magnetic orientation of the anode active material according to the application of the magnetic field may become low. Accordingly, the resistance of the anode active material layer 120 may be increase and the rapid charging performance may be degraded.

According to exemplary embodiments of the present disclosures, the second anode active material layer 124 formed of the anode slurry having the reduced free binder content may be further included. Thus, the degree of magnetic orientation of the anode active material layer 120 may be increased and the resistance may be decreased.

Hereinafter, a method for reducing the free binder content of the anode slurry will be described in detail.

In some embodiments, the anode active material and the binder may be dispersed to form the preliminary anode slurry, and the conductive material may be added to the preliminary anode slurry to form the anode slurry. In this case, the anode active material and the binder may be combined in advance so that a ratio of a weight of the binder combined with the anode active material based on a total weight of the binder included in the anode slurry may be increased. Accordingly, the free binder content of the anode slurry may become low.

In some embodiments, the preparation of the preliminary anode slurry may be performed at a normal pressure and at a temperature of 50 °C to 90 °C. Under the above conditions, an esterification reactivity between a COOM functional group of the binder and a OH group of the silicon-based active material may be improved, so that a bonding property of the anode active material and the binder may be increased. Thus, the free binder content in the anode slurry may be effectively reduced.

In some embodiments, the preliminary anode slurry may be phase-separated through a centrifugation. The phase-separated upper layer of the preliminary anode slurry may be removed, and then the conductive material may be added to a remaining lower layer of the preliminary slurry.

For example, an anode active material-binder composite formed by combining the anode active material and the binder may sink into the lower layer of the preliminary anode slurry by the centrifugation to be separated from the free binder included in the upper layer of the preliminary anode slurry. Thereafter, the conductive material may be added to the lower layer of the preliminary slurry to obtain the anode slurry having the reduced free binder content.

In some embodiments, the binder may be added together with the conductive material to the lower layer of the preliminary slurry.

In example embodiments, the second anode slurry may be a slurry in which the content of the free binder is adjusted as being low according to the above-described embodiments. Thus, the anode active material layer 120 having a multi-layered structure in which the free binder content of the first anode active material layer 122 is greater than the free binder content of the second anode active material layer 124 may be formed.

For example, the first anode active material layer 122 having the relatively high free binder content may be directly formed on a top surface of the anode current collector 125. Accordingly, irreversible expansion occurring in a lower portion of the anode active material layer 120 may be prevented by the first anode active material layer 122. Thus, the life-span properties of the lithium secondary battery during repeated charging and discharging may be improved.

In example embodiments, the free binder content of the second anode active material layer 124 may be smaller than that of the first anode active material layer 122. Accordingly, the degree of vertical orientation of the anode active material by the application of the magnetic field may be improved. Thus, the resistance of the surface of the anode 130 may be reduced and power properties of the secondary battery may be improved.

In example embodiments, the first anode slurry and the second anode slurry may be sequentially applied on the anode current collector 125, and then the magnetic field may be applied in a direction vertical to the anode current collector 125. Accordingly, the anode active material included in the anode slurry may be self-aligned in the direction vertical to the anode current collector 125.

For example, the anode active material may include graphite, and a (002) plane of graphite particles may be oriented in the direction vertical to the surface of the anode current collector 125 by applying the magnetic field. Accordingly, a movement path of lithium ions inserted into and desorbed in the direction vertical to the surface of the anode current collector 125 may become shortened, and the rapid charging performance may be enhanced.

In example embodiments, the degree of vertical orientation of the carbon-based active material included in the first anode active material layer 122 may be smaller than the degree of vertical orientation of the carbon-based active material included in the second anode active material layer 124. Accordingly, the second anode slurry having the relatively small free binder content may have greater fluidity than that of the first anode slurry having the relatively large free binder content.

Thus, when the magnetic field is applied to the anode slurry, the vertical orientation of the anode active material included in the second anode slurry may be improved. Further, mobility of lithium ions at a surface portion of the anode 130 may be increased, thereby reducing the resistance and improving the rapid charging properties.

In some embodiments, a content of the anode active material may be from about 90 wt% to about 98 wt%, a content of the binder may be from about 1 wt% to 5 wt%, and a content of the conductive material may be from about 0.1 wt% to 5 wt% based on a total solid content the anode slurry. Within the above range, capacity improvement and resistance reduction of the secondary battery may be easily implemented, and mechanical stability of the secondary battery may be improved.

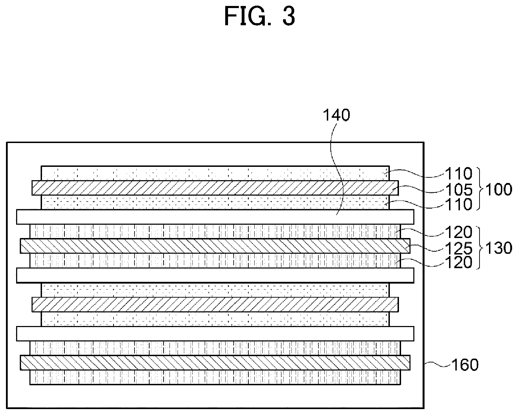

FIGS. 2 and 3 are a schematic plan view and a schematic cross-sectional view, respectively, illustrating a secondary battery in accordance with exemplary embodiments. For example, FIG. 3 is a cross-sectional view taken along a line I-I' of FIG. 2 in a thickness direction of the lithium secondary battery.

Referring to FIGS. 2 and 3, the lithium secondary battery includes a cathode 100 and the anode 130 as described above, and may further include a separation layer 140 interposed between the cathode 100 and the anode 130.

The cathode 100 may include a cathode active material layer 110 formed by coating a mixture containing a cathode active material to a cathode current collector 105.

The cathode active material may include a compound capable of reversibly intercalating and de-intercalating lithium ions.

In example embodiments, the cathode active material may include lithium-transition metal oxide particles. For example, the lithium-transition metal oxide particles include nickel (Ni) and may further include at least one of cobalt (Co) and manganese (Mn).

For example, the lithium-transition metal oxide may be represented by Chemical Formula 1 below.

[Chemical Formula 1]      $Li_xNi_{1-y}M_yO_{2+z}$

In Chemical Formula 1, $0.9 \leq x \leq 1.2$, $0 \leq y \leq 0.7$, and $-0.1 \leq z \leq 0.1$. M may include at least one element selected from Na, Mg, Ca, Y, Ti, Hf, V, Nb, Ta, Cr, Mo, W, Mn, Co, Fe, Cu, Ag, Zn, B, Al, Ga, C, Si, Sn and Zr.

In some embodiments, a molar ratio or a concentration (1-y) of Ni in Chemical Formula 1 may be greater than or equal to 0.8, and may exceed 0.8 in an embodiment.

Ni may serve as a transition metal related to power and capacity of the lithium secondary battery. Therefore, as described above, a high-Ni composition may be employed to the lithium-transition metal oxide particle, a high-power cathode and a high-power lithium secondary battery may be provided.

As the content of Ni increases, long-term storage stability and life-span stability of the cathode or the secondary battery may be relatively degraded. In example embodiments, the life-span stability and capacity retention may be improved using Mn while maintaining electrical conductivity and power by an introduction of Co.

In some embodiments, the cathode active material or the lithium-transition metal oxide particle may further include a coating element or a doping element. For example, the coating element or the doping element may include Al, Ti, Ba, Zr, Si, B, Mg, P, W, V, an alloy thereof, or an oxide thereof. These may be used alone or in a combination of two or more therefrom. The cathode active material particles may be passivated by the coating or doping element, so that stability against a penetration of an external object and life-span properties may be further improved.

A cathode slurry may be prepared by mixing and stirring the cathode active material with a binder, a conductive material, and/or a dispersive agent in a solvent. The cathode slurry may be coated on at least one surface of the cathode current collector 105, and then dried and pressed to form the cathode 100.

The cathode current collector 105 may include, e.g., stainless steel, nickel, aluminum, titanium, copper, or an alloy thereof, and aluminum or an aluminum alloy may be used in an embodiment.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as the cathode binder. In this case, an amount of the binder for forming the cathode active material layer may be reduced, and an amount of the cathode active material may be relatively increased. Thus, capacity and power of the lithium secondary battery may be further improved.

The conductive material may be included to promote an electron mobility between the active material particles. For example, the conductive material may include a carbon-based conductive material such as graphite, carbon black, graphene, and carbon nanotube, and/or a metal-based conductive material such as tin, tin oxide, titanium oxide, a perovskite material such as $LaSrCoO_3$, $LaSrMnO_3$, etc.

As described with reference to FIG. 1, the anode 130 may include the anode current collector 125 and the anode active material layer 120 having the multi-layered structure. For convenience of descriptions, detailed structures of the first anode active material layer 122 and the second anode active material layer 124 are omitted in FIG. 3.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may be also formed from a non-woven fabric including a glass fiber with a high melting point, a polyethylene terephthalate fiber, etc.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without loss by, e.g., precipitation or sedimentation.

In example embodiments, an electrode cell may be defined by the cathode 100, the anode 130 and the separation layer 140, and a plurality of the electrode cells may be stacked to form an electrode assembly 150 having, e.g., a jelly roll shape. For example, the electrode assembly 150 may be formed by winding, laminating or folding of the separation layer 140.

The electrode assembly 150 may be accommodated together with an electrolyte in a case 160 to define a lithium secondary battery. In example embodiments, a non-aqueous electrolyte may be used as the electrolyte.

For example, the non-aqueous electrolyte solution may include a lithium salt and an organic solvent. The lithium salt and may be represented by $Li^+X^-$. An anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N$; $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 2, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

In FIG. 2, the anode lead 107 and the cathode lead 127 are illustrated as protruding from an upper side of the case 160 in a plan view, but the positions of the electrode leads are not limited as illustrated in FIG. 2. For example, the electrode leads may protrude from at least one of both lateral sides of the case 160, or may protrude from a lower side of the case 160. Alternatively, the cathode lead 107 and the anode lead 127 may protrude from different sides of the case 160.

The lithium secondary battery may be manufactured in, e.g., a cylindrical shape using a can, a square shape, a pouch shape or a coin shape.

Hereinafter, preferred embodiments are proposed to more concretely describe the present invention.

Preparation Examples: Preparation of Anode Slurry

Preparation Example 1: Anode Slurry A

97.15 parts by weight of an anode active material (graphite: $SiO_x$ ($0<x<2$) = 91:9 weight ratio mixture) and 1.2 parts by weight of CMC (carboxymethyl cellulose) were mixed using a PD mixer (planetary despa mixer) under a room temperature (25 °C) and a normal pressure (1 atm) for 60 minutes to prepare a preliminary anode slurry by mixing a solvent. Distilled water ($H_2O$) was used as the solvent. 0.15 parts by weight of carbon nanotube (CNT) as a conductive material and 1.5 parts by weight of styrene butadiene rubber (SBR) were added to the preliminary anode slurry, and then mixed to obtain an anode slurry, so that an anode slurry A having a solid content of 40 wt% based on a total weight of the anode slurry was obtained.

The slurry was centrifuged in a centrifuge at 15,000 rpm for 20 minutes. When the anode slurry was centrifuged, the binder bonded with the anode active material was phase-separated into a lower layer, and the binder unbonded with the anode active material was phase-separated into an upper layer.

After centrifugation and drying, the upper slurry was fired while heating from a room temperature (e.g. 25 °C) to 400 °C at a ramping rate of 50 °C/min. An amount of the free binder was measured through a weight loss of the upper slurry. The firing temperature was adjusted at 500 °C for 10 minutes to remove the free binder. A free binder content of the anode slurry A was 5.19 %.

Preparation Example 2: Anode Slurry B

An anode slurry B was prepared by the same method as that in Preparation Example 1, except that the preliminary anode slurry was prepared at 70 °C and the normal pressure. A free binder content of the anode slurry B was 3.11 % by the same method as that in Preparation Example 1.

Preparation Example 3: Anode Slurry C

A preliminary anode slurry was prepared by the same method as that in Preparation Example 1, and then the preliminary anode slurry was centrifuged (15,000 rpm, 20 minutes) to remove an upper layer of the preliminary anode slurry which was phase-separated into the upper layer and a lower layer. 1 part by weight of the conductive material and 1.5 parts by weight of SBR were added to the lower layer of the preliminary anode slurry and mixed to prepare an anode slurry C having a solid content of 40 wt% based on a total weight of the anode slurry. A free binder content of the anode slurry C was 4.24 % by the same method as that in Preparation Example 1.

Preparation Example 4: Anode Slurry D

An anode slurry D was prepared by the same method as that in Preparation Example 3, except that the centrifugation (15,000 rpm, 20 minutes) was repeated twice for the preliminary anode slurry. A free binder content of the anode slurry D was 2.27 % by the same method as that in Preparation Example 3.

Preparation Example 5: Anode Slurry E

97.15 parts by weight of an anode active material (graphite: $SiO_x$ ($0<x<2$) = 91:9 weight ratio mixture) and 1.2 parts by weight of CMC were mixed for 60 minutes using a PD mixer (planetary despa mixer) at 70 °C and normal pressure to prepare a preliminary anode slurry. The preliminary anode slurry was centrifuged (15,000 rpm, 20 minutes) to remove an upper layer of the preliminary anode slurry which was phase-separated into the upper layer and a lower layer. 0.15 parts by weight of CNT and 1.5 parts by weight of SBR were added to the lower layer of the preliminary anode slurry, and mixed to prepare an anode slurry E having a solid content of 40 wt% based on a total weight of the anode slurry. A free binder content of the anode slurry E was 2.61 % by the same method as that in Preparation Example 1.

Preparation Example 6: Anode Slurry F

An anode slurry F was prepared by the same method as that in Preparation Example 1, except that 97.15 parts by weight of the anode active material, 1.5 parts by weight of CMC, 0.13 parts by weight of CNT, and 1.2 parts by weight of SBR were used. A free binder content of the anode slurry F was 7.11 % by the same method as that in Preparation Example 1.

Preparation Example 7: Anode Slurry G

97.15 parts by weight of an anode active material (graphite: $SiOx$ ($0<x<2$) = 91:9 weight ratio mixture), 0.15 parts by weight of CNT, 1.2 parts by weight of CMC (carboxymethyl cellulose), 1.5 parts by weight of SBR (styrene butadiene rubber) were mixed to obtain an anode slurry G having a solid content of 40 wt% based on a total weight of the slurry. A free binder content of the anode slurry G was 10.05 % by the same method as that in Preparation Example 1.

Preparation Example 8: Anode Slurry H

An anode slurry H was prepared by the same method as that in Preparation Example 6, except that a solid content in a total weight of the anode slurry was 30 wt%. A free binder content of the anode slurry H was 10.94 % by the same method as that in Preparation Example 6.

Preparation Example 9: Anode Slurry I

An anode slurry I was prepared by the same method as that in Preparation Example 6, except that a solid content in a total weight of the anode slurry was 25 wt%. A free binder content of the anode slurry I was 11.90 % by the same method as that in Preparation Example 6.

Preparation Example 10: Anode Slurry J

An anode slurry J was prepared by the same method as that in Preparation Example 6, except that a solid content in a total weight of the anode slurry was 45 wt%. A free binder content of the anode slurry I was 9.72 % by the same method as that in Preparation Example 6.

Examples 1 to 8

1) Fabrication of Anode

A first anode slurry and a second anode slurry according to Table 1 were sequentially applied on a copper current collector. After being passed between a pair of neodymium magnets having a magnetic field of 4.000 Gauss for 2 seconds, the coated slurries were dried and pressed to prepare an anode.

2) Fabrication of Cathode

A cathode slurry was prepared by mixing 96 parts by weight of a cathode active material of $Li[Ni_{0.8}Co_{0.1}Mn_{0.1}]O_2$, 2 parts by weight of CNT, 2 parts by weight of PVDF, and N-methyl pyrrolidone (NMP) as a solvent. The cathode slurry was coated on an aluminum current collector, dried and pressed to prepare a cathode.

3) Manufacture of Lithium Secondary Battery

The prepared anode and cathode were alternately stacked with a separator (polyethylene, 13 $\mu$m in thickness) interposed therebetween to form an electrode assembly. The electrode assembly was inserted into a pouch and sealed, and an electrolyte solution was injected to form a lithium secondary battery. A 1M LiPF6 solution prepared using a mixed solvent of EC/DEC (50/50; volume ratio) was used as electrolyte solution.
Subsequently, a pre-charging was performed for 48 minutes with a current (20A) corresponding to 0.25C. After 12 hours, degassing was performed, and aging was performed for more than 24 hours. Thereafter, formation charging and discharging were performed (charging condition CC-CV 0.25C 4.2V 0.05C CUT-OFF, discharging condition CC 0.2C 2.5V CUT-OFF).

Example 9

A lithium secondary battery was manufactured by the same method as that in Example 1, except that a magnetic field was not applied in the preparation of the anode.

Comparative Examples 1 to 6

Lithium secondary batteries were manufactured by the same method as in Examples 1 to 5, except that the types of the first anode slurry and the second anode slurry were changed as shown in Table 1 below.

Comparative Example 7

A lithium secondary battery was manufactured by the same method as that in Comparative Example 1, except that a magnetic field was not applied in the preparation of the anode.
In Table 1 below, the free binder content ratio refers to a ratio of the free binder content of the second anode slurry relative to the free binder content of the first anode slurry.

[Table 1]

| No. | first anode slurry | second anode slurry | free binder content in first anode slurry (%) | free binder content in second anode slurry (%) | free binder content ratio |
|---|---|---|---|---|---|
| Example 1 | G | A | 10.05 | 5.19 | 0.52 |
| Example 2 | G | B | 10.05 | 3.11 | 0.31 |
| Example 3 | G | C | 10.05 | 4.24 | 0.42 |
| Example 4 | G | D | 10.05 | 2.27 | 0.23 |
| Example 5 | G | E | 10.05 | 2.61 | 0.26 |
| Example 6 | I | F | 11.90 | 7.11 | 0.59 |
| Example 7 | J | A | 9.72 | 5.19 | 0.53 |
| Example 8 | H | F | 10.94 | 7.11 | 0.65 |
| Example 9 | G | A | 10.05 | 5.19 | 0.52 |
| Comparativ e Example 1 | G | G | 10.05 | 10.05 | 1 |
| Comparativ e Example 2 | A | A | 5.19 | 5.19 | 1 |
| Comparativ e Example 3 | B | B | 3.11 | 3.11 | 1 |
| Comparativ e Example 4 | H | H | 10.94 | 10.94 | 1 |
| Comparativ e Example 5 | I | I | 11.90 | 11.90 | 1 |
| Comparativ e Example 6 | J | J | 9.72 | 9.72 | 1 |
| Comparativ e Example 7 | G | G | 10.05 | 10.05 | 1 |

Experimental Example

(1) Evaluation on Degree of Vertical Orientation

A peak intensity ratio ($I_{004}/I_{110}$) of a (004) plane to a (110) plane of each anode according to Examples and Comparative Examples was measured through an X-ray diffraction (XRD) analyzer. $I_{004}$ may represent a peak intensity in a parallel direction, and $I_{110}$ may represent a peak intensity in a vertical direction. Accordingly, the value of $I_{004}/I_{110}$ may be inversely proportion to a degree of vertical orientation, and the degree of vertical orientation may decrease as the value of $I_{004}/I_{110}$ increases.

Specific XRD analysis equipment/conditions are shown in Table 2 below.

[Table 2]

| XRD(X-Ray Diffractometer) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

(2) Evaluation on 10 second-Discharge Resistance (mQ)

A discharge resistance of each secondary battery according to Examples and Comparative Examples was measured at room temperature (25 °C) under conditions of 50% SOC and 1C for 10 seconds.

(3) Evaluation on Rapid Charging Capacity Retention rate (%)

Each secondary battery according to Examples and Comparative Examples was rapidly charged at room temperature (25 °C) in a range of SOC 8-80% for 20 minutes, and then a discharge (0.33C, SOC 8%, CC CUT-OFF) was repeated. A discharge capacity retentions at the 100th cycle and the 500 cycle relative to an initial discharge capacity were measured as percentages.

(4) Evaluation of Anode Adhesion

An adhesive between the anode current collector and the anode active material layer was measured. Each secondary batteries according to Examples and Comparative Examples was charged (CC-CV 0.5C 4.2V 0.05C CUT-OFF) and discharged (CC 0.5C 2.8V CUT-OFF) in the range of SOC 4-98% at room temperature (25 °C) by 500 cycles. A tape was attached to a surface of the anode, and then a peel strength at a peeling angle of 90° was measured using IMADA's ZLINK 3.1. An adhesion reduction ratio (%) was measured by measuring a peel strength after the 500 cycles compared to an initial peel strength.

The evaluation results are shown in Table 3 below.

[Table 3]

| No. | degree of vertical orientation ($I_{004}/I_{110}$) | 10 second discharge resistance (mΩ) | rapid charge capacity retention (%) | | adhesion reduction ratio (%) |
|---|---|---|---|---|---|
| | | | 100 cycles | 500 cycles | |
| Example 1 | 7.44 | 735.5 | 99.2 | 90.3 | 26.8 |
| Example 2 | 3.87 | 610.2 | 98.9 | 92.1 | 25.7 |
| Example 3 | 3.88 | 614.9 | 99.5 | 91.3 | 32.2 |
| Example 4 | 3.37 | 606.5 | 99.8 | 94.2 | 24.8 |
| Example 5 | 3.87 | 599.8 | 99.8 | 96.0 | 22.4 |
| Example 6 | 7.92 | 742.8 | 98.9 | 89.2 | 27.6 |
| Example 7 | 7.78 | 738.2 | 99.0 | 91.3 | 30.6 |
| Example 8 | 0.51 | 743.5 | 98.7 | 91.0 | 35.2 |
| Example 9 | 11.52 | 853.8 | 80.5 | <70 | 10.3 |
| Comparative Example 1 | 9.26 | 792.6 | 97.8 | 81.5 | 33.4 |
| Comparative Example 2 | 8.12 | 685.1 | 99.5 | 85.2 | 45.4 |
| Comparative Example 3 | 3.04 | 608.2 | 99.6 | <70 | 100 (peeled-off) |
| Comparative Example 4 | 3.10 | 611 | 99.5 | 83.0 | 72.0 |
| Comparative Example 5 | 3.37 | 621.1 | 99.5 | 81.6 | 78.0 |
| Comparative Example 6 | 9.08 | 839.6 | 88.2 | <70 | 15.7 |
| Comparative Example 7 | 9.71 | 853.8 | 80.5 | <70 | 10.6 |

Referring to Table 3, in Examples where the free binder content of the second anode active material layer was smaller than the free binder content of the first anode active material layer, lower resistance, improved rapid charging performance and mechanical stability were provided compared to those from Comparative Examples.

As the free binder content of the first anode active material layer was relatively increased compared to that of the second anode active material layer, the life-span property after the repeated charge/discharge were maintained even when the magnetic field was applied.

In Example 9 where no magnetic field was applied, the electrode resistance increased and the rapid fast charge properties were lower than those of other Examples.

In Example 5 where the free binder content of the second anode active material layer was 6 % or less, the resistance property, capacity retention and the life-span property were improved compared to those from other Examples.

In Example 6 where the free binder content of the second anode active material layer was greater than 6 %, the resistance property was relatively degraded compared to those from other Examples.

In Example 7 where the free binder content of the first anode active material layer was less than 10 %, the adhesion reduction ratio was relatively degraded comparted to those from other Examples.

In Example 8 in which the free binder content ratio exceeded 0.6, the resistance property and the adhesion were relatively degraded compared to those from other Examples.

**Claims**

1. An anode for a lithium secondary battery, comprising:

   an anode current collector; and
   a first anode active material layer and a second anode active material layer sequentially stacked on a surface of the anode current collector, each of the first anode active material layer and the second anode active material layer comprising an anode active material and a binder,
   wherein a content of a free binder unbonded with the anode active material in the first anode active material layer based on a weight of the binder included in the first anode active material layer is greater than a content of a free binder unbonded with the anode active material in the second anode active material layer based on a weight of the binder included in the second anode active material layer.

2. The anode for a lithium secondary battery according to claim 1, wherein the first anode active material layer and the second anode active material layer are each formed from an anode slurry containing the anode active material and the binder, and

   a free binder content calculated by Equation 1 below of the first anode active material layer is greater than a free binder content calculated by Equation 1 below of the second anode active material layer:

   [Equation 1]

   $$\text{Free Binder Content (\%)} = [(W_{UI} - W_{UF})/B_T] * 100$$

   wherein, in Equation 1, $B_T$ is a total weight (g) of the binder included in the anode slurry,
   the anode slurry is phase-separated into an upper slurry and a lower slurry by centrifuging at 15,000 rpm for 20 minutes, and a weight (g) of the upper slurry after being dried is represented as $W_{UI}$, and
   $W_{UF}$ is a weight (g) after firing the dried upper slurry by heating from a room temperature to 400° C at a rate of 50 °C/min.

3. The anode for a lithium secondary battery according to claim 2, wherein the anode slurry further comprises a conductive material.

4. The anode for a lithium secondary battery according to any one of claims 1 to 3, wherein a ratio of the free binder content of the second anode active material layer to the free binder content of the first anode active material layer is 0.6 or less.

5. The anode for a lithium secondary battery according to any one of claims 1 to 4, wherein the free binder content of the second anode active material layer is 6 % or less.

6. The anode for a lithium secondary battery according to any one of claims 1 to 5, wherein the free binder content of the first anode active material layer is 10 % or more.

7. The anode for a lithium secondary battery according to any one of claims 1 to 6, wherein each of the first anode active material layer and the second anode active material layer comprises a silicon-based active material and a carbon-based active material as the anode active material,
   preferably wherein the carbon-based active material comprises artificial graphite.

8. The anode for a lithium secondary battery according to claim 7, wherein a content of the silicon-based active material is from 5 wt% to 30 wt% based on a total weight of the anode active material.

9. The anode for a lithium secondary battery according to claim 7 or claim 8, wherein a degree of vertical orientation of the carbon-based active material included in the first anode active material layer is smaller than a degree of vertical orientation of the carbon-based active material included in the second anode active material layer.

10. A lithium secondary battery, comprising:

the anode for a secondary battery according to any one of claims 1 to 9; and
a cathode facing the anode and including a lithium-transition metal oxide as a cathode active material.

11. A method of fabricating an anode for a lithium secondary battery, comprising:

preparing a first anode slurry and a second anode slurry each containing a binder, an anode active material and a conductive material; and
forming a first anode active material layer and a second anode active material layer by sequentially coating the first anode slurry and the second anode slurry on an anode current collector,
wherein a free binder content calculated by Equation 1 below of the first anode slurry is greater than a free binder content calculated by Equation 1 below of the second anode slurry:

[Equation 1]

$$\text{Free Binder Content (\%)} = [(W_{UI} - W_{UF})/B_T] * 100$$

wherein, in Equation 1, $B_T$ is a total weight (g) of the binder included in the anode slurry,
the anode slurry is phase-separated into an upper slurry and a lower slurry by centrifuging at 15,000 rpm for 20 minutes, and a weight (g) of the upper slurry after being dried is represented as $W_{UI}$, and
$W_{UF}$ is a weight (g) after firing the dried upper slurry by heating from a room temperature to 400° C at a rate of 50 °C/min.

12. The method according to claim 11, wherein preparing the second anode slurry comprises:

preparing a preliminary anode slurry by dispersing the anode active material and the binder; and
adding the conductive material to the preliminary anode slurry.

13. The method according to claim 12, wherein preparing the second anode slurry comprises:

phase-separating the preliminary anode slurry by centrifuging before adding the conductive material; and
removing an upper slurry of the phase-separated preliminary anode slurry.

14. The method according to any one of claims 11 to 13, wherein forming the first anode active material layer and the second anode active material layer comprises:

forming a first preliminary anode active material layer and a second preliminary anode active material layer by sequentially coating the first anode slurry and the second anode slurry on the anode current collector; and
applying a magnetic field in a vertical direction to the anode current collector to orient the anode active material.

15. The method according to claim 14, wherein the anode active material comprises a carbon-based active material and a silicon-based active material, and
a degree of vertical orientation of the carbon-based active material included in the first anode active material layer is smaller than a degree of vertical orientation of the carbon-based active material included in the second anode active material layer.

# FIG. 1

# FIG. 2

## FIG. 3